# EUROPEAN PATENT APPLICATION

(11) **EP 3 067 132 A1**
(43) Date of publication of application: **14.09.2016**
(21) Application number: 15158611.2
(22) Date of filing: 11.03.2015
(51) Int. Cl.: B22F 3/105, B23K 26/30, B29C 67/00

(54) **METHOD AND APPARATUS FOR PRODUCING A THREE-DIMENSIONAL WORK PIECE WITH THERMAL FOCUS SHIFT COMPENSATION OF THE LASER**

(71) Applicant: SLM Solutions Group AG, 23556 Lübeck (DE)
(72) Inventor: Schwarze, Dr. Dieter, 23556 Lübeck (DE); Krol, Toni Adam, 23556 Lübeck (DE); Wiesner, Andreas, 23556 Lübeck (DE)
(74) Representative: Schicker, Silvia

(57) **Abstract**

A method for producing a three-dimensional work piece comprises the steps of applying a raw material powder onto a carrier (16), and selectively irradiating electromagnetic or particle radiation onto the raw material powder applied onto the carrier (16) by means of an irradiation unit (18) in order to produce the work piece from said raw material powder on the carrier (16) by a generative layer construction method, wherein the irradiation unit (18) comprises a radiation source (24) and a plurality of optical elements (30, 32, 34, 35). Operation of the irradiation unit (18) is controlled in dependence on an operating temperature dependent change of at least one optical property of at least one optical element (30, 32, 34, 35) of the irradiation unit (18).

## Description

The present invention relates to a method and an apparatus for producing a three-dimensional work piece by irradiating layers of a raw material powder with electromagnetic or particle radiation. Further, the invention relates to a method for manufacturing an apparatus for producing a three-dimensional work piece by irradiating layers of a raw material powder with electromagnetic or particle radiation.

Powder bed fusion is an additive layering process by which pulverulent, in particular metallic and/or ceramic raw materials can be processed to three-dimensional work pieces of complex shapes. To that end, a raw material powder layer is applied onto a carrier and subjected to laser radiation in a site selective manner in dependence on the desired geometry of the work piece that is to be produced. The laser radiation penetrating into the powder layer causes heating and consequently melting or sintering of the raw material powder particles. Further raw material powder layers are then applied successively to the layer on the carrier that has already been subjected to laser treatment, until the work piece has the desired shape and size. Powder bed fusion may be employed for the production of prototypes, tools, replacement parts, high value components or medical prostheses, such as, for example, dental or orthopaedic prostheses, on the basis of CAD data.

An apparatus for producing moulded bodies from pulverulent raw materials by a powder bed fusion process is described, for example, in EP 1 793 979 B1. The prior art apparatus comprises a process chamber which accommodates a plurality of carriers for the shaped bodies to be manufactured. A powder layer preparation system comprises a powder reservoir holder that can be moved to and fro across the carriers in order to apply a raw material powder to be irradiated with a laser beam onto the carriers. The process chamber is connected to a protective gas circuit comprising a supply line via which a protective gas may be supplied to the process chamber in order to establish a protective gas atmosphere within the process chamber.

An irradiation unit which may, for example, be employed in an apparatus for producing three-dimensional work pieces by irradiating pulverulent raw materials is described in EP 2 335 848 B1. The irradiation unit comprises a laser source and an optical unit. The optical unit which is supplied with a laser beam emitted by the laser source comprises a beam expander and a scanner unit. Within the scanner unit, diffractive optical elements which may be folded into the beam path in order to split the laser beam into a plurality of laser sub-beams are arranged in front of a deflection mirror for deflecting the laser sub-beams. The laser beam or the laser sub-beams emitted by the scanner unit are supplied to an objective lens which is designed in the form of an f-theta lens.

The invention is directed at the object of providing a method and an apparatus, which allow the generation of a high-quality three-dimensional work piece by irradiating layers of a raw material powder with electromagnetic or particle radiation. Further, the invention is directed at the object of providing a method for manufacturing an apparatus of this kind.

These objects are addressed by a method for producing a three-dimensional work piece as defined in claim 1, an apparatus for producing a three-dimensional work piece as defined in claim 8, and a method for manufacturing an apparatus for producing a three-dimensional work piece as defined in claim 15.

In a method for producing a three-dimensional work piece, a raw material powder is applied onto a carrier. The carrier may be disposed in a process chamber which may be sealable against the ambient atmosphere, in order to be able to maintain a controlled atmosphere, in particular an inert atmosphere within the process chamber. The carrier may be a rigidly fixed carrier. Preferably, however, the carrier is designed to be displaceable in vertical direction so that, with increasing construction height of a work piece, as it is built up in layers from the raw material powder, the carrier can be moved downwards in the vertical direction. The raw material powder preferably is a metallic powder, in particular a metal alloy powder, but may also be a ceramic powder or a powder containing different materials. The powder may have any suitable particle size or particle size distribution. It is, however, preferable to process powders of particle sizes < 100 µm. The raw material powder may be applied onto the carrier by means of a suitable powder application device

The raw material powder applied onto the carrier, by means of an irradiation unit, is selectively irradiated with electromagnetic or particle radiation in order to produce the work piece from the raw material powder on the carrier by a generative layer construction method. The irradiation unit comprises a radiation source and a plurality of optical elements. The irradiation unit may comprise only one radiation source. It is, however, also conceivable that the irradiation unit comprises a plurality of radiation sources. In case the irradiation unit comprises a plurality of radiation sources, a separate optical unit comprising a plurality of optical elements may be associated with each radiation source. The at least one radiation source may be a laser source, for example a diode pumped Ytterbium fibre laser. Further, the plurality of optical elements may, for example, include a beam expander for expanding a radiation beam emitted by the radiation source, a scanner and an object lens. Alternatively, the plurality of optical elements may comprise a beam expander including a focusing optic and a scanner unit. By means of the scanner unit, the position of a focus of the radiation beam both in the direction of the beam path and in a plane perpendicular to the beam path can be changed and adapted. The scanner unit may be designed in the form of a galvanometer scanner and the object lens may be an f-theta object lens.

In the method for producing a three-dimensional work piece, operation of the irradiation unit is controlled in dependence on an operating temperature dependent change of at least one optical property of at least one optical element of the irradiation unit. It has been found that optical properties such as, for example, the refractive index of an optical fiber, a lens or another optical element of the irradiation unit or the geometry, in particular the curvature radius of a lens forming an optical element of the irradiation unit change in dependence on the operating temperature of the irradiation unit. The operating temperature of the irradiation unit in turn mainly depends on the output power of a radiation beam emitted by the radiation source of the irradiation unit. In the method for producing a three-dimensional work piece, the operating temperature dependent change of at least one optical property of at least one optical element of the irradiation unit is considered upon controlling the operation of the irradiation unit. As a result, operation of the irradiation unit can be controlled more accurately and a three-dimensional work piece which meets particularly high quality standards can be obtained.

Basically, the method for producing a three-dimensional work piece which involves a control of the operation of the irradiation unit in dependence on an operating temperature dependent change of at least one optical property of at least one optical element of the irradiation unit can be already advantageously employed when the three-dimensional work piece is produced with the aid of an irradiation unit which employs a single radiation source emitting a single radiation beam. However, especially in case a three-dimensional work piece should be produced by simultaneously irradiating electromagnetic or particle radiation provided by a plurality of irradiation units onto the raw material powder applied onto the carried, control of the various irradiation units in dependence on an operating temperature dependent change of at least one optical property of at least one optical element of the irradiation units allows the irradiation units to be synchronized as regards the operating temperature dependent change of at least one optical property of at least one optical element of each irradiation unit. In other words, the irradiation units may be controlled so as to level or balance different operating temperature dependent changes of the optical properties of the optical elements employed in the irradiation units. Thus, a high quality work piece can be produced even in case the optical elements of the various irradiation units are subject to different operating temperature dependent changes of at least one optical property of the optical elements.

Preferably, operation of the irradiation unit is controlled so as to compensate for the operating temperature dependent change of the at least one optical property of the at least one optical element of the irradiation unit. This allows maintaining the quality of the three-dimensional work piece to be generated unaffected by the change of the at least one optical property of the at least one optical element of the irradiation unit when the output power of the radiation beam emitted by the radiation source of the irradiation unit and hence the operating temperature of the irradiation unit is changed, for example, for producing different regions of the work piece to be generated.

In a particular preferred embodiment of the method for producing a three-dimensional work piece, operation of the irradiation unit is controlled in dependence on an operating temperature dependent shift of a focus position of an radiation beam emitted by the radiation source of the irradiation unit in at least one spatial direction. Typically, temperature-induced changes in the refractive index of the optical materials used for manufacturing the optical elements of the irradiation unit as well as temperature induced changes in the geometry, such as, for example, a curvature radius, of the optical elements of the irradiation unit lead to a shift of the focus position of the radiation beam emitted by the radiation source of the irradiation unit. Specifically, it has been found that the focus position of the radiation beam, due to the temperature-induced changes of the optical properties of the optical elements of the irradiation unit, with increasing operating temperature of the irradiation unit is progressively shifted along the beam path of the radiation beam and hence in the direction of a z-axis of a coordinate system, wherein the x-axis and the y-axis define a plane formed by the surface of the raw material powder to be irradiated, and wherein the z-axis extends perpendicular to the x- and the y-axis in the direction of the irradiation unit.

Operation of the irradiation unit therefore preferably is controlled in dependence on an operating temperature dependent shift of the focus position of the radiation beam emitted by the radiation source of the irradiation unit in the direction of the z-axis of the above defined coordinate system. Considering the operating temperature dependent shift of the focus position of the radiation beam emitted by the radiation source in at least one spatial direction and preferably in the direction of the z-axis of the above defined coordinate system upon controlling the operation of the irradiation unit is a relatively easily to establish, but still very effective way of putting into practice a control of the operation of the irradiation unit in dependence on an operating temperature dependent change of at least one optical property of at least one optical element of the irradiation unit.

In a preferred embodiment of the method for producing a three-dimensional work piece, operation of the irradiation unit is controlled so as to compensate for the operating temperature dependent shift of a focus position of the radiation beam emitted by the radiation source of the irradiation unit in at least one spatial direction. For example, the irradiation unit may be controlled in such a manner that the focus position of the radiation beam in at least one spatial direction is adjusted in dependence on the operating temperature of the irradiation unit so as to maintain the focus position of the radiation beam constant in at least one spatial direction even in case the operating temperature of the irradiation unit changes. Preferably, operation of the irradiation unit is controlled so as to compensate for the operating temperature dependent shift of a focus position of the radiation beam emitted by the radiation source of the irradiation unit in the direction of the z-axis of the above defined coordinate system.

In a particular preferred embodiment of the method for producing a three-dimensional work piece, operation of the irradiation unit is controlled in dependence on a correction function indicating a shift of the focus position of the radiation beam emitted by the radiation source of the irradiation unit in one spatial direction in dependence on an output power of the radiation beam emitted by the radiation source of the irradiation unit. The spatial direction preferably is the direction of the z-axis of the above defined coordinate system, i.e. the direction perpendicular to the plane defined by the surface of the raw material powder to be irradiated. The use of a correction function allows the operation of the irradiation unit to be controlled in dependence on the operating temperature-dependent change of at least one optical property of at least one optical element of the irradiation unit over the entire range of possible output power values of the radiation beam.

Preferably, the correction function is the result of a regression analysis performed on data obtained via a calibration measurement of the shift of the focus position of the radiation beam emitted by the radiation source of the irradiation unit in one spatial direction, preferably in the direction of the z-axis of the above defined coordinate system, in dependence on the output power of the radiation beam emitted by the radiation source of the irradiation unit. In one embodiment, the correction function may be a linear function obtained as a result of a linear regression analysis performed on the calibration measurement data. If desired or necessary, it is, however, also conceivable to use a higher order function in the regression analysis for obtaining the correction function. The calibration measurement preferably is performed prior to starting the production of a three-dimensional work piece, wherein it is conceivable to perform the calibration measurement only once, for example, upon manufacturing an apparatus for producing a three-dimensional work piece. As an alternative, it is, however, also possible to perform calibration measurements at selected time intervals, for example as a part of the maintenance work performed on the apparatus for producing a three-dimensional work piece. Regular calibration measurements allow a compensation of changes in the temperature dependence of at least one optical property of at least one optical element of the irradiation unit over time.

The calibration measurement may be performed according to a caustic measurement method. A caustic measurement method allows the operating temperature-dependent shift of the focus position of the radiation beam in at least one spatial direction and in particular in the direction of the z-axis of the above defined coordinate system to be determined with a high reliability and a high accuracy. For example, the shift of the focus position of the radiation beam may be determined at an output power of the radiation beam of 10% of the maximum output power, 25% of the maximum output power and 100% of the maximum output power. A regression analysis may then be performed on said data so as to obtain a linear or higher order correction function. The use of a caustic measurement method for performing a calibration measurement, however, requires a caustic measurement device which typically is not part of the scope of delivery of an apparatus for producing three-dimensional work pieces. A caustic measurement method thus is particularly advantageous for performing a presale calibration measurement upon manufacturing the apparatus for producing a three-dimensional work piece.

Alternatively, the calibration measurement may also be performed according to a pyrometric measurement method. Specifically, a pyrometric detection device as described in non-published European patent application EP 14 194 387 may be used for performing the calibration measurement in order to obtain data on the shift of the focus position of the radiation beam emitted by the radiation source of the irradiation unit in at least one spatial direction and in particular in the direction of the z-axis of the above defined coordinate system in dependence on the output power of the radiation beam emitted by the radiation source of the radiation unit. The calibration measurement then can be performed without the need for a separate caustic measurement device with the aid of a pyrometric detection device which is present in the apparatus for producing a three-dimensional work piece anyway. A calibration measurement then can for example, be performed in the course of a standard maintenance process. Of course, it is also conceivable to use a caustic measurement method for performing a presale calibration or quality check measurement upon manufacturing the apparatus for producing a three-dimensional work piece and to use a pyrometric measurement method for performing calibration measurements at regular time intervals, for example in the course of regular standard maintenance processes.

An apparatus for producing a three-dimensional work piece comprises a raw material powder application device adapted to apply a raw material powder onto a carrier. An irradiation unit is adapted to selectively irradiate electromagnetic or particle radiation onto the raw material powder applied onto the carrier in order to produce the work piece from said raw material powder on the carrier by a generative layer construction method. The irradiation unit comprises a radiation source and a plurality of optical elements. A control unit is adapted to control operation of the irradiation unit in dependence on an operating temperature dependent change of at least one optical property of at least one optical element on the irradiation unit.

The control unit may be adapted to control operation of the irradiation unit so as to compensate for the operating temperature dependent change of the at least one optical property of the at least one optical element of the irradiation unit.

Preferably, the control unit is adapted to control operation of the irradiation unit in dependence on an operating temperature-dependent shift of a focus position of an radiation beam emitted by the radiation source of the irradiation unit in at least one spatial direction.

Specifically, the control unit may be adapted to control operation of the irradiation unit so as to compensate for the operating temperature-dependent shift of the focus position of the radiation beam emitted by the radiation source of the irradiation unit in at least one spatial direction.

In a preferred embodiment of the apparatus, the control unit is adapted to control operation of the irradiation unit in dependence on a correction function indicating a shift of the focus position of the radiation beam emitted by the radiation source of the irradiation unit in one spatial direction in dependence on an output power of the radiation beam emitted by the radiation source of the irradiation unit.

The correction function may be the result of a regression analysis performed on data obtained via a calibration measurement of the shift of the focus position of the radiation beam emitted by the radiation source of the irradiation unit in one spatial direction in dependence on the output power of the radiation beam emitted by the radiation source of the irradiation unit.

The apparatus may further comprise a caustic measurement device adapted to perform the calibration measurement according to a caustic measurement method. The caustic measurement device may be detachably connected to the apparatus which allows the caustic measurement device to be removed from the apparatus after performing the calibration measurement. Alternatively or additionally thereto, the apparatus may comprise a pyrometric detection device adapted to perform the calibration measurement according to a pyrometric measurement method.

In a method for manufacturing an apparatus for producing a three-dimensional work piece, an irradiation unit is provided which is adapted to selectively irradiate electromagnetic or particle radiation onto a raw material powder applied onto a carrier in order to produce the work piece from said raw material powder on the carrier by a generative layer construction method. The irradiation unit comprises a radiation source and at least one optical element. An operating temperature dependent shift of a focus position of a radiation beam emitted by the radiation source of the irradiation unit in at least one spatial direction is determined. Preferably, an operating temperature dependent shift of the focus position of the radiation beam emitted by the radiation source in the direction of a z-axis of a coordinate system, wherein the x-axis and the y-axis define a plane formed by the surface of the raw material powder to be irradiated, and wherein the z-axis extends perpendicular to the x- and the y-axis in the direction of the irradiation unit is determined. The at least one optical element of the irradiation unit is selected for final installation in the apparatus in case the temperature dependent shift of the focus position of the radiation beam emitted by the radiation source of the irradiation unit is below a threshold value.

For example, the shift of the focus position of the radiation beam in at least one spatial direction, in particular in the direction of the z-axis of the above defined coordinate system, may be determined for selected output power values of the radiation beam emitted by the radiation source of the irradiation unit. Specifically, the shift of the focus position of the radiation beam may be determined at an output power of the radiation beam of 10% of the maximum output power, 25% of the maximum output power and 100% of the maximum output power. At an output power of 10% of the maximum output power, more or less no shift of the focus positon of the radiation beam occurs. The focus position shift measured at an output power of the radiation beam of 10% of the maximum output power thus may be used as a reference value for the following measurements at for example 25% and 100% of the maximum output power of the radiation beam. The at least one optical element irradiation unit may, for example, be selected for final installation in the apparatus only in case the focus position shift along the z-axis of the above defined coordinate system is below 0.5 of the Raleigh length of the radiation beam. If desired, plural optical elements intended for being employed in the irradiation unit and for finally being installed in the apparatus may be tested and selected in this manner.

Preferred embodiments of the invention now are described in greater detail with reference to the appended schematic drawings wherein
- Fig. 1: shows an apparatus for producing three-dimensional work pieces by selectively irradiating electromagnetic or particle radiation onto a raw material powder and
- Fig. 2: shows a diagram indicating a shift of a focus position of a radiation beam emitted by a radiation source of an irradiation unit employed in the apparatus of Fig. 1 which is caused by a change of the optical properties of the optical elements of the irradiation unit in dependence on the output power of the radiation beam.

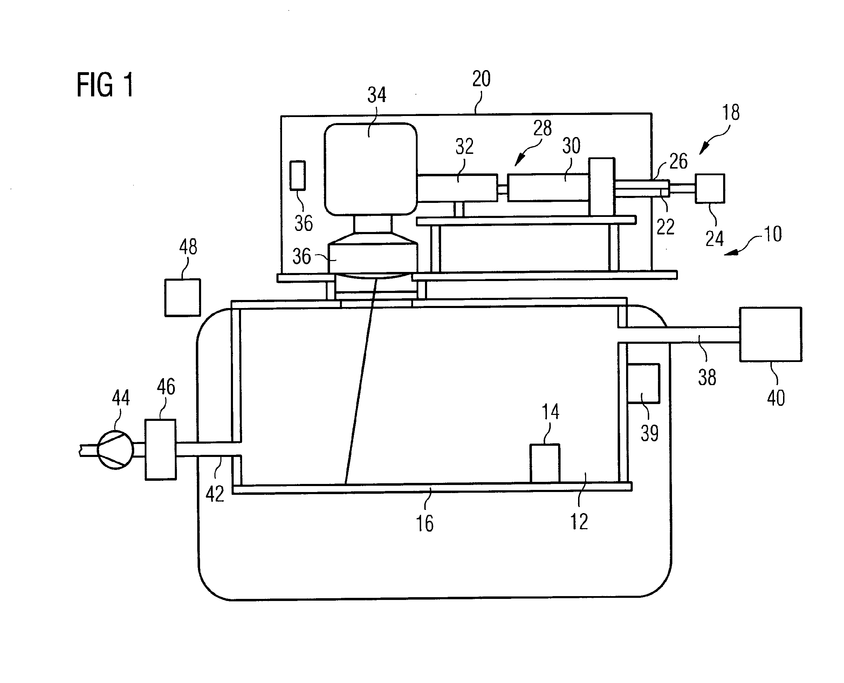

Figure 1 shows an apparatus 10 for producing a three-dimensional work piece. The apparatus 10 comprises a process chamber 12. A powder application device 14, which is disposed in the process chamber 12, serves to apply a raw material powder onto a carrier 16. The carrier 16 is designed to be displaceable in vertical direction so that, with increasing construction height of a work piece, as it is built up in layers from the raw material powder on the carrier 16, the carrier 16 can be moved downwards in the vertical direction.

The apparatus 10 further comprises an irradiation unit 18 for selectively irradiating laser radiation onto the raw material powder applied onto the carrier 16. By means of the irradiation unit 20, the raw material powder applied onto the carrier 18 may be subjected to laser radiation in a site-selective manner in dependence on the desired geometry of the work piece that is to be produced. The irradiation unit 18 has a hermetically sealable housing 20. A radiation beam 22, in particular a laser beam, provided by a radiation source 24, in particular a laser source which may, for example, comprise a diode pumped Ytterbium fibre laser emitting laser light at a wavelength of approximately 1070 to 1080 nm is directed into the housing 20 via an opening 26.

The irradiation unit 18 further comprises an optical unit 28 for guiding and processing the radiation beam 22, the optical unit 28 comprising optical elements such as a beam expander 30 for expanding the radiation beam 22 emitted by the radiation source 24, a focusing lens 32 for focusing the radiation beam 22, a scanner unit 34 and an objective lens 35. The scanner unit 34 and the object lens 35 may, for example, be designed in the form of a galvanometer scanner and an f-theta object lens. By means of the scanner 34, the position of the focus of the radiation beam 22 both in the direction of the beam path and in a plane perpendicular to the beam path can be changed and adapted. The operation of the irradiation unit 18 is controlled by means of a control unit 36.

The process chamber 12 is sealable against the ambient atmosphere, i.e. against the environment surrounding the process chamber 12. The process chamber 12 is connected to a gas supply line 38 via which a gas provided by a gas source 40 may be supplied to the process chamber 12. The gas supplied to the process chamber 12 from the gas source 40 may be an inert gas such as, for example, Argon or Nitrogen. A discharge line 42 serves to discharge gas containing particulate impurities such as, for example, raw material powder particles or welding smoke particles from the process chamber 12 during irradiating electromagnetic or particle radiation onto the raw material powder applied onto the carrier 16 in order to produce a work piece made of said raw material powder by an additive layer construction method. The gas containing particulate impurities is discharged from the process chamber 12 by means of a conveying device 44 such as, for example, a pump. A filter 46 disposed in the discharge line 42 upstream of the conveying device 44 serves to filter the particulate impurities from the gas stream discharged from the process chamber 12 After passing the filter 46 the gas stream may be recirculated into the process chamber 12 via the gas supply line 38. Finally, the apparatus 10 comprises a pyrometric detection device 39 as described in non-published European patent application EP 14 194 387.

The optical properties such as, for example, the refractive index and the geometry of the optical elements 30, 32, 34, 35 of the irradiation unit 18 change in dependence on the operating temperature of the irradiation unit 18 which in turn mainly depends on the output power of the radiation beam 22 emitted by the radiation source 24 of the irradiation unit 18. These temperature-induced changes in the refractive index of the optical materials used for manufacturing the optical elements 30, 32, 34, 35 as well as temperature induced changes in the geometry of the optical elements 30, 32, 34, 35 lead to a shift of the focus position of the radiation beam 22 emitted by the radiation source 24. Specifically, the focus position of the radiation beam 22, due to the temperature-induced changes of the optical properties of the optical elements 30, 32, 34, 35, with increasing operating temperature of the irradiation unit 18, is progressively shifted along the beam path of the radiation beam 22 and hence in the direction of a z-axis of a coordinate system, wherein the x-axis and the y-axis define a plane formed by the surface of the raw material powder to be irradiated, and wherein the z-axis extends perpendicular to the x- and the y-axis in the direction of the irradiation unit 18.

Upon manufacturing the apparatus 10 for producing a three-dimensional work piece, a quality check of the irradiation unit 18 is performed. For this purpose, the irradiation unit 18 which is equipped with at least one, but usually all of the optical elements 30, 32, 34, 35 is provided and installed in the apparatus 10. Thereafter, the operating temperature dependent shift of the focus position of the radiation beam 22 emitted by the radiation source 24 of the irradiation unit 18 in at least one spatial direction, in particular in the direction of the z-axis of the coordinate system, wherein the x-axis and the y-axis define the plane formed by the surface of the raw material powder to be irradiated, and wherein the z-axis extends perpendicular to the x- and the y-axis in the direction of the irradiation unit 18 is determined. Specifically, in a first step, the output power of the radiation beam 22 is set to 10% of the maximum output power and a first value of the shift of the focus position which is induced by the temperature-induces changes in the optical properties of the at least one optical element 30, 32, 34, 35 of the irradiation unit 18 is measured. Since more or less no shift of the focus position of the radiation beam 22 occurs at an output power of the radiation beam 22 of 10% of the maximum output power, the value for the shift of the focus position measured at an output power of the radiation beam 22 of 10% of the maximum output power is taken a reference value.

Thereafter, values of the shift of the focus position which is induced by the temperature-induces changes in the optical properties of the at least one optical element 30, 32, 34, 35 of the irradiation unit 18 is measured at an output power of the radiation beam 22 of 25% of the maximum output power and 100% of the maximum output power. The at least one optical element 30, 32, 34, 35 of the irradiation unit 18 is selected for final installation in the apparatus 10 only in case the temperature dependent shift of the focus position of the radiation beam 22 emitted by the radiation source 24 of the irradiation unit 18 is below a threshold value. In particular, it is determined that the at least one optical element 30, 32, 34, 35 meets the required quality standards only in case the focus position shift along the z-axis of the above defined coordinate system, which is induced by the operating temperature depended changes in the optical properties of the at least one optical element 30, 32, 34, 35, is below 0.5 of the Raleigh length of the radiation beam 22.

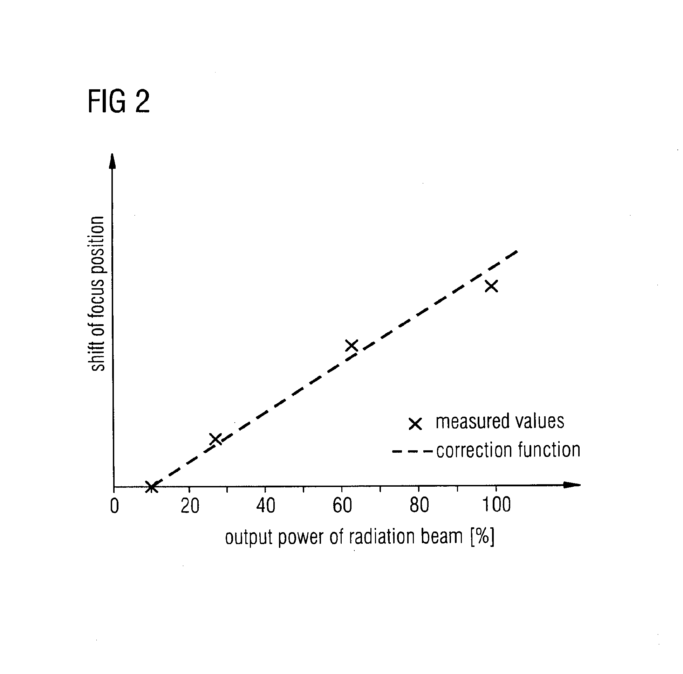

In case it is determined that the at least one optical element 30, 32, 34, 35 meets the required quality standards for installation in the apparatus 10, a calibration measurement is performed. Like the above described quality check measurements, also the calibration measurement outlined further below is performed according to a caustic measurement method with the aid of a caustic measurement device 48 which is detachably provided to the apparatus 10 and therefore may be removed from the apparatus 10 after completion of the calibration process. In the calibration measurement, the shift of the focus position, which is induced by the temperature-induces changes in the optical properties of the optical elements 30, 32, 34, 35 of the irradiation unit 18, is measured at selected output power values of the radiation beam 22 in order to obtain the measured values indicated in the diagram of Fig. 2. Specifically, the measured values indicate the shift of the focus position of the radiation beam 22 in the direction of the z-axis of the above defined coordinate system which is caused by the operating temperature-induced changes in the optical properties of the optical elements 30, 32, 34, 35. As becomes apparent from Fig. 2, more or less no shift of the focus position of the radiation beam 22 occurs at an output power of the radiation beam 22 of 10% of the maximum output power. With increasing output power of the radiation beam 22, the shift progressively increases.

Based on the measured values of the shift of the focus position of the radiation beam 22, a correction function indicating the shift of the focus position in one spatial direction, i.e. in the direction of the z-axis of the above defined coordinate system, in dependence on the output power of the radiation beam 22 is determined. In the diagram of Fig. 2, the correction function is the result of a linear regression analysis performed on the measured values. It is, however, also conceivable to use a higher order function in the regression analysis for obtaining the correction function. The correction function is input into the control unit 36. For example, the correction function may be stored in a memory of the control unit 36.

During operation of the apparatus 10 so as to produce a three-dimensional work piece, the control unit 36 controls the operation of the irradiation unit 18 in dependence on an operating temperature dependent change of the optical properties of the optical elements 30, 32, 34, 35 of the irradiation unit 18. Specifically, the control unit 36 controls the operation of the irradiation unit 18 so as to compensate for the operating temperature dependent change of the optical properties of the optical element 30, 32, 34, 35. With the aid of the correction function, the control unit 36 controls the operation of the irradiation unit 18 in dependence on the operating temperature dependent shift of the focus position of the radiation beam 22 so as to compensate for said operating temperature dependent shift of the focus position. This allows maintaining the quality of the three-dimensional work piece to be generated unaffected by the operating temperature induced changes of the optical properties of the optical elements 30, 32, 34, 35 when the output power of the radiation beam 22 and hence the operating temperature of the irradiation unit 18 is changed, for example, for producing different regions of the work piece to be generated.

The calibration measurement described above may be performed only once, for example, upon manufacturing the apparatus 10. It is, however, also possible to perform calibration measurements at regular time intervals, for example as a part of the maintenance work performed on the apparatus 10 for producing a three-dimensional work piece. The pyrometric detection device 39 may be used for performing the regular calibration measurements.

## Claims

1. A method for producing a three-dimensional work piece, the method comprising the steps of:
- applying a raw material powder onto a carrier (16),
- selectively irradiating electromagnetic or particle radiation onto the raw material powder applied onto the carrier (16) by means of an irradiation unit (18) in order to produce the work piece from said raw material powder on the carrier (16) by a generative layer construction method, the irradiation unit (18) comprising a radiation source (24) and a plurality of optical elements (30, 32, 34, 35),
wherein operation of the irradiation unit (18) is controlled in dependence on an operating temperature dependent change of at least one optical property of at least one optical element (30, 32, 34, 35) of the irradiation unit (18).

2. The method according to claim 1,
wherein operation of the irradiation unit (18) is controlled so as to compensate for the operating temperature dependent change of the at least one optical property of the at least one optical element (30, 32, 34, 35) of the irradiation unit (18).

3. The method according to claim 1 or 2,
wherein operation of the irradiation unit (18) is controlled in dependence on an operating temperature dependent shift of a focus position of an radiation beam (22) emitted by the radiation source (24) of the irradiation unit (18) in at least one spatial direction.

4. The method according to claim 3,
wherein operation of the irradiation unit (18) is controlled so as to compensate for the operating temperature dependent shift of the focus position of the radiation beam (22) emitted by the radiation source (24) of the irradiation unit (18) in at least one spatial direction.

5. The method according to any one of claims 1 to 4,
wherein operation of the irradiation unit (18) is controlled in dependence on a correction function indicating a shift of the focus position of the radiation beam (22) emitted by the radiation source (24) of the irradiation unit (18) in one spatial direction in dependence on an output power of the radiation beam (22) emitted by the radiation source (24) of the irradiation unit (18).

6. The method according to claim 5,
wherein the correction function is the result of a regression analysis performed on data obtained via a calibration measurement of the shift of the focus position of the radiation beam (22) emitted by the radiation source (24) of the irradiation unit (18) in one spatial direction in dependence on the output power of the radiation beam (22) emitted by the radiation source (24) of the irradiation unit (18).

7. The method according to claim 6,
wherein the calibration measurement is performed according to a caustic measurement method and/or a pyrometric measurement method.

8. An apparatus (10) for producing a three-dimensional work piece, the apparatus (10) comprising:
- a raw material powder application device (14) adapted to apply a raw material powder onto a carrier (16),
- an irradiation unit (18) adapted to selectively irradiate electromagnetic or particle radiation onto the raw material powder applied onto the carrier (16) in order to produce the work piece from said raw material powder on the carrier (16) by a generative layer construction method, the irradiation unit (18) comprising a radiation source (24) and a plurality of optical elements (30, 32, 34, 35), and a control unit (36) adapted to control operation of the irradiation unit (18) in dependence on an operating temperature dependent change of at least one optical property of at least one optical element (30, 32, 34, 35) of the irradiation unit (18).

9. The apparatus according to claim 1,
wherein the control unit (36) is adapted to control operation of the irradiation unit (18) so as to compensate for the operating temperature dependent change of the at least one optical property of the at least one optical element (30, 32, 34, 35) of the irradiation unit (18).

10. The apparatus according to claim 8 or 9,
wherein the control unit (36) is adapted to control operation of the irradiation unit (18) in dependence on an operating temperature dependent shift of a focus position of an radiation beam (22) emitted by the radiation source (24) of the irradiation unit (18) in at least one spatial direction.

11. The apparatus according to claim 10,
wherein the control unit (36) is adapted to control operation of the irradiation unit (18) so as to compensate for the operating temperature dependent shift of the focus position of the radiation beam (22) emitted by the radiation source (24) of the irradiation unit (18) in at least one spatial direction.

12. The apparatus according to any one of claims 8 to 11,
wherein the control unit (36) is adapted to control operation of the irradiation unit (18) in dependence on a correction function indicating a shift of the focus position of the radiation beam (22) emitted by the radiation source (24) of the irradiation unit (18) in one spatial direction in dependence on an output power of the radiation beam (22) emitted by the radiation source (24) of the irradiation unit (18).

13. The apparatus according to claim 12,
wherein the correction function is the result of a regression analysis performed on data obtained via a calibration measurement of the shift of the focus position of the radiation beam (22) emitted by the radiation source (24) of the irradiation unit (18) in one spatial direction in dependence on the output power of the radiation beam (22) emitted by the radiation source (24) of the irradiation unit (18).

14. The apparatus according to claim 13,
further comprising a caustic measurement device adapted to perform the calibration measurement according to a caustic measurement method and/or a pyrometric detection device (39) adapted to perform the calibration measurement according to a pyrometric measurement method.

15. A method for manufacturing an apparatus (10) for producing a three-dimensional work piece, the method comprising:
- providing an irradiation unit (18) adapted to selectively irradiate electromagnetic or particle radiation onto a raw material powder applied onto a carrier (16) in order to produce the work piece from said raw material powder on the carrier (16) by a generative layer construction method, the irradiation unit (18) comprising a radiation source (24) and at least one optical element (30, 32, 34, 35),
- determining an operating temperature dependent shift of a focus position of an radiation beam (22) emitted by the radiation source (24) of the irradiation unit (18), and
- selecting the optical element (30, 32, 34, 35) of the irradiation unit (18) for final installation in the apparatus (10) in case the temperature dependent shift of the focus position of the radiation beam (22) emitted by the radiation source (24) of the irradiation unit (18) in at least one spatial direction is below a threshold value.

## Amended claims

### Amended claims in accordance with Rule 137(2) EPC.

1. A method for producing a three-dimensional work piece, the method comprising the steps of:
- applying a raw material powder onto a carrier (16),
- selectively irradiating electromagnetic or particle radiation onto the raw material powder applied onto the carrier (16) by means of an irradiation unit (18) in order to produce the work piece from said raw material powder on the carrier (16) by a generative layer construction method, the irradiation unit (18) comprising a radiation source (24) and a plurality of optical elements (30, 32, 34, 35), the radiation source (24) emitting a radiation beam (22),
wherein operation of the irradiation unit (18) is controlled in dependence on an operating temperature dependent change of at least one optical property of at least one optical element (30, 32, 34, 35) of the irradiation unit (18),
wherein the operating temperature dependent change corresponds to an operating temperature dependent shift of a focus position of the radiation beam (22) in a direction along a beam path of the radiation beam (22), and
wherein operation of the irradiation unit (18) is controlled so as to compensate for the operating temperature dependent shift.

2. The method according to claim 1,
wherein operation of the irradiation unit (18) is controlled in dependence on a correction function indicating a shift of the focus position of the radiation beam (22) emitted by the radiation source (24) of the irradiation unit (18) in the direction along the beam path of the radiation beam (22) in dependence on an output power of the radiation beam (22) emitted by the radiation source (24) of the irradiation unit (18).

3. The method according to claim 2,
wherein the correction function is the result of a regression analysis performed on data obtained via a calibration measurement of the shift of the focus position of the radiation beam (22) emitted by the radiation source (24) of the irradiation unit (18) in the direction along the beam path of the radiation beam (22) in dependence on the output power of the radiation beam (22) emitted by the radiation source (24) of the irradiation unit (18).

4. The method according to claim 3,
wherein the calibration measurement is performed according to a caustic measurement method and/or a pyrometric measurement method.

5. An apparatus (10) for producing a three-dimensional work piece, the apparatus (10) comprising:
- a raw material powder application device (14) adapted to apply a raw material powder onto a carrier (16),
- an irradiation unit (18) adapted to selectively irradiate electromagnetic or particle radiation onto the raw material powder applied onto the carrier (16) in order to produce the work piece from said raw material powder on the carrier (16) by a generative layer construction method, the irradiation unit (18) comprising a radiation source (24) and a plurality of optical elements (30, 32, 34, 35), the radiation source (24) being configured to emit a radiation beam (22), and
- a control unit (36) adapted to control operation of the irradiation unit (18) in dependence on an operating temperature dependent change of at least one optical property of at least one optical element (30, 32, 34, 35) of the irradiation unit (18),
wherein the operating temperature dependent change corresponds to an operating temperature dependent shift of a focus position of the radiation beam (22) in a direction along a beam path of the radiation beam (22), and
wherein the control unit (36) is adapted to control operation of the irradiation unit (18) so as to compensate for the operating temperature dependent shift.

6. The apparatus according to claim 5,
wherein the control unit (36) is adapted to control operation of the irradiation unit (18) in dependence on a correction function indicating a shift of the focus position of the radiation beam (22) emitted by the radiation source (24) of the irradiation unit (18) in the direction along the beam path of the radiation beam (22) in dependence on an output power of the radiation beam (22) emitted by the radiation source (24) of the irradiation unit (18).

7. The apparatus according to claim 6,
wherein the correction function is the result of a regression analysis performed on data obtained via a calibration measurement of the shift of the focus position of the radiation beam (22) emitted by the radiation source (24) of the irradiation unit (18) in the direction along the beam path of the radiation beam (22) in dependence on the output power of the radiation beam (22) emitted by the radiation source (24) of the irradiation unit (18).

8. The apparatus according to claim 7,
further comprising a caustic measurement device adapted to perform the calibration measurement according to a caustic measurement method and/or a pyrometric detection device (39) adapted to perform the calibration measurement according to a pyrometric measurement method.

9. A method for manufacturing an apparatus (10) for producing a three-dimensional work piece, the method comprising:
- providing an irradiation unit (18) adapted to selectively irradiate electromagnetic or particle radiation onto a raw material powder applied onto a carrier (16) in order to produce the work piece from said raw material powder on the carrier (16) by a generative layer construction method, the irradiation unit (18) comprising a radiation source (24) and at least one optical element (30, 32, 34, 35), the radiation source (24) being configured to emit a radiation beam (22),
- determining an operating temperature dependent shift of a focus position of the radiation beam (22) in a direction along a beam path of the radiation beam (22), and
- selecting the optical element (30, 32, 34, 35) of the irradiation unit (18) for final linstallation in the apparatus (10) in case the temperature dependent shift of the focus position of the radiation beam (22) emitted by the radiation source (24) of the irradiation unit (18) in the direction along the beam path of the radiation beam (22) is below a threshold value.
